# EUROPÄISCHE PATENTSCHRIFT

(11) **EP 2 216 579 B1**
(45) Veröffentlichungstag und Bekanntmachung des Hinweises auf die Patenterteilung: **18.04.2012**
(21) Anmeldenummer: 09001485.3
(22) Anmeldetag: 04.02.2009
(51) Int. Cl.: F16L 55/033, F16L 9/21

(54) **Druckluft-Schalldämpfersystem**
Compressed air acoustic dampening system
Système d'amortissement d'oscillations à air comprimé

(43) Veröffentlichungstag der Anmeldung: 11.08.2010
(73) Patentinhaber: FESTO AG & Co. KG, 73734 Esslingen (DE)
(72) Erfinder: Bürk, Erwin, Dr., 73732 Esslingen (DE); Bretzler, Markus, 73540 Heubach (DE); Hafuz-Hasan, Mustafa, 70599 Stuttgart (DE); Müller, Helmut, 73734 Esslingen (DE)
(74) Vertreter: Abel, Martin

(56) Entgegenhaltungen:
- EP-A- 0 505 759
- EP-A- 0 713 995
- DE-U1-202006 015 493
- FR-A- 2 657 945
- US-A- 5 048 572
- US-A1- 2009 025 384

## Beschreibung

Die Erfindung betrifft ein Druckluft-Schalldämpfersystem zur Schalldämpfung eines aus einer pneumatischen Baueinheit ausströmenden Druckluftstroms, mit einem Grundkörper, der in einer Längsrichtung von einem Strömungskanal durchsetzt ist, der für eine Durchströmung mit dem Druckluftstrom ausgebildet ist und der an einem stirnseitigen Endbereich des Grundkörpers in einer Mündungsöffnung ausmündet, wobei im Strömungskanal wenigstens eine radial nach innen in den freien Querschnitt des Strömungskanals ragende und ausgehend von der Mündungsöffnung in Längsrichtung erstreckte Rippe ausgebildet ist.

Aus der DE 20 2004 005 746 U1 ist ein Druckluft-Schalldämpfersystem bekannt, bei dem ein Schalldämpfer-Basismodul, das einen sich in Längsrichtung des Basismoduls erstreckenden Strömungskanal aufweist, mittels eines Befestigungsabschnitts an einer pneumatischen Baueinheit festgelegt werden kann. Bei der pneumatischen Baueinheit handelt es sich beispielsweise um einen Vakuumerzeuger, der auf dem Ejektorprinzip basiert und der zur Erzeugung eines Vakuums von Druckluft durchströmt wird. Dabei können aufgrund der strömenden Druckluft unerwünschte Geräusche auftreten, die gegebenenfalls zur Einhaltung von Lärmschutzanforderungen zumindest teilweise gedämpft werden müssen. Zu diesem Zweck kann das bekannte Druckluft-Schalldämpfersystem eingesetzt werden. In dem Basismodul des bekannten Druckluft-Schalldämpfersystems ist eine den Strömungskanal begrenzende Schallabsorptionsanordnung vorgesehen, die eine radial innenliegende Lochhülse und konzentrisch zur Lochhülse radial außenliegendes Absorptionsmaterial umfasst. Mit Hilfe der Schallabsorptionsanordnung werden Schallwellen im Druckluftstrom zumindest teilweise absorbiert, so dass an der Mündungsöffnung des Schalldämpfer-Basismoduls, an der der Strömungskanal in die Umgebung mündet und der Druckluftstrom als Freistrahl in die Umgebung austritt, geringere Schallemissionen vorliegen, als dies an der Ausmündung der pneumatischen Baueinheit ohne angebautes Druckluft-Schalldämpfersystem der Fall wäre. Bei dem bekannten Druckluft-Schalldämpfersystem handelt es sich um ein offenes Schalldämpfersystem, bei dem der gesamte Druckluftstrom durch einen gemeinsamen Strömungskanal geführt wird, womit ein geringer Strömungswiderstand für den Druckluftstrom gewährleistet wird. Eine Verstopfung des Strömungskanals durch in der Druckluft enthaltene Partikel, wie sie beispielsweise bei Schalldämpfern mit vom Druckluftstrom durchströmten porösen Materialien auftreten kann, ist nahezu vollständig ausgeschlossen. Durch den offenen Aufbau ist jedoch die Schalldämpfungswirkung des bekannten Druckluft-Schalldämpfersystems, insbesondere unter Beachtung weiterer Randbedingungen wie einer kompakten Bauweise, begrenzt.

Die EP 0 713 995 A1 offenbart einen Einsatz zur Schalldämpfung eines Wasserstroms, der durch einen Wandanschluss strömen kann. Der Einsatz umfasst eine starre Hülse, die mit Ausnehmungen versehen ist und die in einer elastischen Hülse aufgenommen ist. Das strömende Wasser kann durch die Ausnehmungen in einen Zwischenraum zwischen der starren Hülse und der elastischen Hülse einströmen, wobei in dem Zwischenraum radial nach außen erstreckte, von der starren Hülse ausgehende Rippen ausgebildet sind. Diese Rippen erstrecken sich über die gesamte Länge der starren Hülse und des zwischen den Hülsen ausgebildeten Zwischenraums.

Die Aufgabe der Erfindung besteht darin, ein Druckluft-Schalldämpfersystem bereitzustellen, das bei kompakter Bauweise eine verbesserte Schalldämpfung ermöglicht.

Diese Aufgabe wird durch ein Druckluft-Schalldämpfersystem der eingangs genannten Art gelöst, bei dem ein erster Strömungskanalabschnitt mit einer Reflexions- und/oder Absorptionswand ausgebildet ist und sich die Rippe ausgehend von der Mündungsöffnung zumindest bereichsweise in einen zweiten Strömungskanalabschnitt erstreckt, der zwischen dem ersten Strömungskanalabschnitt und der Mündungsöffnung ausgebildet ist.

In dem ersten Strömungskanalabschnitt findet eine Schalldämpfung, insbesondere durch Mehrfachreflexion und/oder durch Absorption in einem geeigneten Absorptionsmaterial, statt. Die Wirkung der Absorption wird durch Mehrfachreflexionen verstärkt. Dazu ist der erste Strömungskanalabschnitt beispielsweise mit einer radial innen liegenden Lochhülse versehen, die von Absorptionsmaterial umgeben ist. Durch die Durchbrüche in der Lochhülse können Schallwellen in das Absorptionsmaterial eintreten und werden dort absorbiert. Diejenigen Schallwellen, die nicht auf einen Durchbruch in der Lochhülse auftreffen, werden an der Lochhülsenoberfläche reflektiert und treten mit einer gewissen Wahrscheinlichkeit in einem gegenüberliegenden Bereich durch einen entsprechenden Durchbruch in der Lochhülse hindurch, um anschließend im Absorptionsmaterial absorbiert zu werden. Im zweiten Strömungskanalabschnitt kann entweder eine geschlossene Strömungskanalwand vorgesehen sein, an der sich die Rippe in Längsrichtung radial nach innen erstreckt. Alternativ kann die Strömungskanalwand zwischen benachbarten Rippen mit Durchbrüchen versehen sein, um ein Hindurchtreten von Schallwellen in radial außenliegendes Absorptionsmaterial zu ermöglichen, um so eine Schalldämpfung durch Absorption in Verbindung mit Mehrfachreflexion zu erzielen.

Zudem wird durch die wenigstens eine im zweiten Strömungskanalabschnitt erstreckte Rippe eine deutliche Reduzierung der am Strahlrand des aus der Mündungsöffnung als Freistrahl in die Umgebung austretenden Druckluftstroms vorliegenden Druckschwankungen und damit einhergehender Schallwellen erreicht. Durch die wenigstens eine Rippe wird der Strömungswiderstand für den Druckluftstrom im Strömungskanal nur geringfügig vergrößert, wobei die Zunahme des Strömungswiderstands durch die Reduzierung der Schallemissionen mehr als aufgewogen wird. Eine Wirkungsweise der wenigstens einen Rippe liegt darin, dass der Druckluftstrom im Bereich der Mündungsöffnung bereichsweise in wenigstens zwei Teilströmungen aufgeteilt wird. Dadurch vergrößert sich die Umfangsfläche des aus der Mündungsöffnung in die Umgebung austretenden Freistrahls und somit die Größe der Grenzfläche zwischen der ruhenden Umgebungsluft und der bewegten Strahlluft. Zusammen mit den Wirbelstrukturen, die sich an der nach außen weisenden Stirnseite der wenigstens einen Rippe ausbilden und die mit der Luftströmung in Strömungsrichtung abschwimmen, wird die Durchmischung der Strahlluft mit der Umgebungsluft sowie die Durchmischung der einzelnen Strömungsbereiche innerhalb des Luftstrahls verstärkt. Verglichen mit einem Freistrahl mit kreisrundem Querschnitt wird die hohe Strömungsgeschwindigkeit im Strählkern aufgrund der Rippen auf einem kürzeren Strömungsweg abgebaut. Die Geschwindigkeitsgradienten der Luftströmung des Freistrahls gegenüber der ruhenden Umgebungsluft werden aufgrund der wenigstens einen Rippe reduziert, womit eine Reduzierung der Druckschwankungen in der freien Scherschicht des Freistrahls und damit eine Reduzierung der Schallemissionen einhergeht. Die wenigstens eine Rippe ragt in radialer Richtung lediglich über einen Teil des Querschnitts in den Strömungskanal hinein. Vorzugsweise ist die Erstreckung der Rippe in Längsrichtung, die auch als Rippenlänge bezeichnet werden kann, größer als die Erstreckung der Rippe in radialer Richtung, die auch als Rippenhöhe bezeichnet werden kann und um ein Vielfaches-größer als die Erstreckung der Rippe in Umfangsrichtung, die auch als Rippenbreite bezeichnet werden kann. Besonders bevorzugt ist die Rippenhöhe größer, insbesondere wenigstens um den Faktor 2 größer, als die Rippenbreite. Die wenigstens eine Rippe kann beispielsweise einstückig mit dem Grundkörper ausgebildet sein.

Vorteilhaft ist es, wenn die wenigstens eine Rippe geradlinig, insbesondere parallel zur Längsrichtung, ausgebildet ist. Hierdurch wird eine möglichst geringe Beeinträchtigung des Strömungswiderstands für den Druckluftstrom im Strömungskanal gewährleistet, da die Stirnfläche der Rippe für die entlangströmende Druckluft klein ist. Alternativ kann die Längsachse der Rippe einen spitzen Winkel mit der Längsrichtung des Strömungskanals einnehmen. Bei einer anderen alternativen Ausführungsform kann auch vorgesehen sein, dass die Rippe eine leichte Krümmung in Längsrichtung aufweist, die insbesondere wendelförmig ausgebildet sein kann. Durch die Anordnung der Rippe schräg zur Längsrichtung oder die gekrümmte Ausführung der Rippe kann dem Druckluftstrom ein geringfügiger Drall, beispielsweise eine Strömungsrotation um die Längsachse, aufgeprägt werden. Damit ist unter bestimmten Randbedingungen eine zusätzliche Reduzierung der durch den Druckluftstrom hervorgerufenen Schalleffekte möglich.

In Ausgestaltung der Erfindung ist vorgesehen, dass sich die Rippe in einen der Mündungsöffnung benachbarten Endabschnitt des Strömungskanals erstreckt. Um eine möglichst geringe Beeinflussung des Strömungswiderstands für den Druckluftstrom im Strömungskanal zu erreichen, erstreckt sich die Rippe vorzugsweise nicht über die gesamte Länge des Strömungskanals, sondern lediglich über einen Abschnitt des Strömungskanals, der unmittelbar benachbart zur Mündungsöffnung angeordnet ist. Die Wirkung der wenigstens einen Rippe ist vorteilhaft, wenn die Rippe im mündungsnahen Bereich angeordnet ist, da hierdurch die Durchmischung der Strahlluft mit der Umgebungsluft begünstigt wird. Dies führt zu einer Reduzierung der Gradienten, insbesondere der Druckgradienten, innerhalb der freien Scherschicht der Strahlluft. Insbesondere werden die Druckschwankungen am Rande des Freistrahls abgeschwächt, was in reduzierten Schallemissionen resultiert.

Bei einer vorteilhaften Ausführungsform der Erfindung ist vorgesehen, dass in Umfangsrichtung des Strömungskanals mehrere Rippen angeordnet sind. Mit einer größeren Anzahl von Rippen lässt sich eine vorteilhafte Aufteilung der Druckluftströmung in mehrere Teilströmungen und damit eine verstärkte Durchmischung des Freistrahls mit der Umgebungsluft erreichen, wodurch die Schallemissionen reduziert werden.

Vorzugsweise sind die Rippen in gleicher Teilung in Umfangsrichtung im Strömungskanal angeordnet. Dadurch werden jeweils gleichartige Teilströme des Druckluftstroms erzeugt. Dadurch wird eine homogene Mischung über den Strahlumfang und eine Abschwächung der Geschwindigkeitsgradienten zwischen Freistrahl und Umgebungsluft bewirkt, um eine Reduktion der Druckschwankungen am Strahlrand und damit eine Reduktion der Schallemissionen zu erreichen.

In weiterer Ausgestaltung der Erfindung ist vorgesehen, dass die wenigstens eine Rippe bezogen auf die Längserstreckung endseitig, zumindest an einem der Mündungsöffnung abgewandten Endbereich, verjüngt ausgebildet ist. Durch die endseitige Verjüngung der Rippe an dem der Mündungsöffnung abgewandten Endbereich wird ein sanfter Strömungsübergang von dem ohne Rippen ausgeführten Strömungskanalabschnitt in den mit Rippen ausgeführten Strömungskanalabschnitt gewährleistet. Hierdurch werden beim Eintritt des Druckluftstroms in den mit wenigstens einer Rippe versehenen Abschnitt des Strömungskanals unerwünschte Verwirbelungen im Druckluftstrom vermieden, die innerhalb des Strömungskanals durch Wechselwirkung mit der Wandung zu Druckschwankungen und damit zu Schallemissionen führen könnten.

Vorteilhaft ist es, wenn wenigstens ein Endbereich der Rippe hinsichtlich der Rippenbreite und/oder der Rippenhöhe verjüngt ausgebildet ist. Die Verjüngung kann beispielsweise keilförmig oder bogenförmig ausgebildet sein.

In weiterer Ausgestaltung der Erfindung ist vorgesehen, dass die wenigstens eine Rippe in einer senkrecht zur Längsrichtung ausgerichteten Querschnittsebene eine in radialer Richtung nach innen verjüngte, insbesondere spitz zulaufende, beispielsweise schneidenartige, Profilierung aufweist. Für den Druckluftstrom stellt sich im radial außenliegenden, wandnahen Bereich des Strömungskanals aufgrund der Wandreibung eine geringere Strömungsgeschwindigkeit als in einer radial innenliegenden Kernströmungszone ein. Daher ist in diesem Bereich eine größere Rippenbreite weniger störend. Hingegen herrscht im wandfernen, radial innenliegenden Bereich des Strömungskanals, also in der Kernströmungszone, die höchste Strömungsgeschwindigkeit, so dass hier ein schmales Profil der Rippen vorteilhaft ist, um in diesem Bereich den freien Querschnitt möglichst wenig zu beeinträchtigen. Dies wird durch die verjüngte, insbesondere spitz zulaufende, beispielsweise schneidenartige, Profilierung der Rippen gewährleistet. Vorteilhaft ist es, wenn die radiale Erstreckung der Rippen, also die Rippenhöhe, in einem Bereich angesiedelt ist, der vorzugsweise etwa 25 Prozent des freien Durchmessers des Strömungskanals beträgt. Damit wird für die Kernströmungszone ein freier Querschnitt bereitgestellt, der nicht oder nur in geringem Maß von den radial nach innen gerichteten Rippen beeinträchtigt wird.

In weiterer Ausgestaltung der Erfindung ist vorgesehen, dass eine zwischen in Umfangsrichtung benachbart angeordneten Rippen, vorzugsweise zwischen jedem Rippenpaar, ausgebildete Strömungskanalwand wenigstens einen Durchbruch aufweist. Die Strömungskanalwand dient zur Begrenzung des Strömungskanals in radialer Richtung nach außen. Durch bereichsweise ausgebildete Durchbrüche können Schallwellen aus dem Strömungskanal in einen Zwischenraum zwischen Strömungskanalwand und Grundkörper eintreten und werden dort durch Reflexion und/oder Absorption zumindest teilweise bedämpft.

Vorzugsweise ist die wenigstens eine Rippe an einem zur Aufnahme im Grundkörper vorgesehenen, zumindest bereichsweise hülsenförmig ausgebildeten Einsatzteil angeordnet. Die hülsenförmige Außenwand des Einsatzteils bildet hierbei die Strömungskanalwand, die beispielsweise auch mit entsprechenden Durchbrüchen versehen sein kann. Das Einsatzteil kann je nach Einsatzbereich des Druckluft-Schalldämpfersystems aus einer Gruppe unterschiedlich gestalteter Einsatzteile ausgewählt und in den Grundkörper eingesetzt werden. Beispielsweise unterscheiden sich die Einsatzteile hinsichtlich der Anzahl und Geometrie der Rippen und/oder der Anzahl und Geometrie der Durchbrüche.

Bei einer Ausführungsform der Erfindung ist vorgesehen, dass das Einsatzteil wenigstens einen umlaufenden Tragring und eine oder mehrere in Längsrichtung erstreckte, insbesondere in Umfangsrichtung in gleicher Teilung angeordnete, vom Tragring getragene Rippen umfasst. Die Bereiche zwischen den Rippen sind freigestellt, so dass der Strömungskanal einerseits durch die Rippen und andererseits durch einen Wandbereich des Grundkörpers, der insbesondere mit Absorptionsmaterial ausgekleidet sein kann, bestimmt wird. Dadurch lässt sich eine besonders vorteilhafte Kombination der Schallabsorptionswirkungen des radial außenliegenden Absorptionsmaterials und der Reduzierung der Schallemissionen des Freistrahls mittels der Rippen des Einsatzteils erreichen. Die Rippen können sich auch zwischen zwei den beiden Endbereichen zugeordneten Tragringen erstrecken.

Vorzugsweise ist die wenigstens eine Rippe an einem zur Anbringung am Grundkörper vorgesehenen, zumindest bereichsweise hülsenförmig ausgebildeten Aufsatzteil angeordnet. Diese getrennte Ausführung ermöglicht sowohl einen konstruktiv einfachen Aufbau des Grundkörpers wie auch des Aufsatzteils. Das Aufsatzteil wird vorzugsweise auf einen Endabschnitt des Grundkörpers aufgesteckt und kann in einfacher Weise gegen ein anderes Aufsatzteil ausgetauscht werden. Dies ermöglicht eine rasche Anpassung der vom Aufsatzteil mitbestimmten Schalldämpfungscharakteristik an veränderte Strömungsverhältnisse und die Bereitstellung eines einfach handhabbaren modularen Systems aus Grundkörper und einer Mehrzahl von einfach austauschbaren Aufsatzteilen.

In weiterer Ausgestaltung der Erfindung ist vorgesehen, dass im Grundkörper in einem radial außenliegenden Bereich längs der Erstreckung der wenigstens einen Rippe zumindest bereichsweise schalldämpfendes Absorptionsmaterial angeordnet ist. Die Strömungskanalwand weist zwischen den benachbarten Rippen wenigstens einen Durchbruch auf, der ein Hindurchtreten der Schallwellen ermöglicht, so dass eine teilweise Schallabsorption mit Hilfe des Absorptionsmaterials bewirkt werden kann.

Vorteilhaft ist es, wenn der Strömungskanal in Umfangsrichtung von einer Strömungskanalwand begrenzt ist, die derart ausgebildet ist, dass sich ein Querschnitt des Strömungskanals in Längsrichtung zur Mündungsöffnung hin verjüngt, insbesondere konisch verjüngt. Vorzugsweise ist die Verjüngung derart ausgebildet, dass nur eine geringfügige Reduzierung des freien Querschnitts des Strömungskanals in Richtung der Mündungsöffnung vorliegt. Dadurch kann beispielsweise bei einem intermittierenden oder pulsierenden Druckluftstrom, der wiederkehrenden Druckschwankungen oder Druckschwingungen unterliegt, eine gewisse Pufferwirkung für die strömende Druckluft hervorgerufen werden, die zu einer Vergleichmäßigung des aus der Mündungsöffnung austretenden Druckluftstroms führt. Die Pufferwirkung basiert auf der geringfügigen Erhöhung des Strömungswiderstands im Mündungsbereich und wirkt sich vorteilhaft auf das Schalldämpfungsverhalten des Druckluft-Schalldämpfersystems aus. Bevorzugt sind die Rippen längs der Verjüngung in radialer Richtung und in Umfangsrichtung zueinander äquidistant ausgebildet.

Bei einer weiteren Ausführungsform der Erfindung ist der Strömungskanal in Umfangsrichtung von einer Strömungskanalwand begrenzt, die derart ausgebildet ist, dass sich ein Querschnitt des Strömungskanals in Längsrichtung zur Mündungsöffnung hin erweitert, insbesondere konisch erweitert. Durch die Erweiterung des Querschnitts des Strömungskanals in Richtung der Mündungsöffnung wird eine Reduzierung der Strömungsgeschwindigkeit für die strömende Druckluft sowie eine Vergrößerung der Grenzfläche zwischen der ausströmenden Strahlluft und der Umgebungsluft erreicht. Dies ist insbesondere für stetige, insbesondere stationäre, Druckluftströmungen von Interesse, die mit einer hohen Strömungsgeschwindigkeit durch das Druckluft-Schalldämpfersystem strömen. Für derartige Druckluftströmungen wird die Austrittsgeschwindigkeit der Druckluft im Bereich der Mündungsöffnung durch die erfindungsgemäße Erweiterung des Strömungskanals reduziert, gleichzeitig wird die Durchmischung zwischen dem ausströmenden Freistrahl und der ruhenden Umgebungsluft sowie die Durchmischung der einzelnen Strahlbereiche vergrößert, um damit das Schalldämpfungsverhalten zu verbessern. Bevorzugt sind die Rippen längs der Verjüngung in radialer Richtung und in Umfangsrichtung zueinander äquidistant ausgebildet.

Bei einer vorteilhaften Ausführungsform der Erfindung ist vorgesehen, dass der Strömungskanal längs des ersten Strömungskanalabschnitts und des zweiten Strömungskanalabschnitts stetig, insbesondere zylindrisch, ausgebildet ist. Durch die Vermeidung von sprunghaften Querschnittänderungen, wie sie bei einem unstetigen Verlauf des Strömungskanals vorliegen könnten, werden Verwirbelungen des Druckluftstroms im Strömungskanal gering gehalten, die ansonsten zu zusätzlichen Schallemissionen führen könnten. Bei einem stetigen Verlauf des Strömungskanals, insbesondere bei einer zylindrischen und/oder bereichsweise konischen Gestaltung des Strömungskanals ohne Querschnittssprünge werden derartige Verwirbelungen des Druckluftstroms vermieden.

Vorteilhaft ist es, wenn die wenigstens eine Rippe im Bereich der Mündungsöffnung stirnseitigbündig mit dem Grundkörper abschließt. Dadurch wird eine unerwünschte Wechselwirkung der an der Hinterkante der wenigstens einen Rippe entstehenden und mit der Strömung abschwimmenden Wirbel mit dem Grundkörper vermieden, wie sie auftreten könnte, wenn die Rippe gegenüber der Mündungsöffnung zurückversetzt enden würde..

Vorteilhafte Ausführungsbeispiele der Erfindung sind in der Zeichnung dargestellt. Dabei zeigt:
- Figur 1: eine perspektivische Darstellung eines Druckluft- Schalldämpfersystems, das mit einer ersten Ausfüh- rungsform eines Einsatzteils ausgestattet ist,
- Figur 2: eine Vorderansicht des Druckluft- Schalldämpfersystems gemäß der Figur 1,
- Figur 3: einen Längsschnitt durch das Druckluft- Schalldämpfersystem gemäß der Figur 1,
- Figur 4: eine perspektivische Darstellung der ersten Ausfüh- rungsform des Einsatzteils für das Druckluft- Schalldämpfersystem,
- Figur 5: eine Vorderansicht des Einsatzteils gemäß Figur 4,
- Figur 6: einen Längsschnitt des Einsatzteils gemäß Figur 4 in einer ersten Schnittebene,
- Figur 7: einen Längsschnitt des Einsatzteils gemäß Figur 4 in einer zweiten Schnittebene, die orthogonal zur Schnittebene gemäß Figur 6 ausgerichtet ist,
- Figur 8: eine perspektivische Darstellung einer zweiten Aus- führungsform eines Einsatzteils für das Druckluft- Schalldämpfersystem,
- Figur 9: eine Vorderansicht des Einsatzteils gemäß Figur 8,
- Figur 10: einen Längsschnitt durch das Einsatzteil gemäß Fi- gur 8 in einer ersten Schnittebene,
- Figur 11: einen Längsschnitt durch das Einsatzteil gemäß Fi- gur 8 in einer zweiten Schnittebene, die orthogonal zur Schnittebene gemäß Figur 10 ausgerichtet ist,
- Figur 12: eine perspektivische Darstellung einer dritten Aus- führungsform eines Einsatzteils für das Druckluft- Schalldämpfersystem,
- Figur 13: eine Vorderansicht des Einsatzteils gemäß Figur 12,
- Figur 14: einen Längsschnitt durch das Einsatzteil gemäß Fi- gur 12 in einer ersten Schnittebene,
- Figur 15: einen Längsschnitt durch das Einsatzteil gemäß Fi- gur 12 in einer zweiten Schnittebene, die orthogo- nal zur Schnittebene gemäß Figur 14 ausgerichtet ist,
- Figur 16: eine perspektivische Darstellung eines vierten Aus- führungsbeispiels eines Einsatzteils für das Druck- luft-Schalldämpfersystem,
- Figur 17: eine Vorderansicht des Einsatzteils gemäß der Figur 16,
- Figur 18: ein Längsschnitt in einer ersten Schnittebene durch das Einsatzteil gemäß Figur 16,
- Figur 19: ein Längsschnitt durch das Einsatzteil gemäß Figur 16 in einer zweiten Schnittebene, die orthogonal zur Schnittebene gemäß Figur 18 ausgerichtet ist,
- Figur 20: eine perspektivische Darstellung einer fünften Aus- führungsform eines Einsatzteils für das Druckluft- Schalldämpfersystem,
- Figur 21: eine Vorderansicht des Einsatzteils gemäß der Figur 20,
- Figur 22: einen Längsschnitt durch das Einsatzteil gemäß Fi- gur 20 in einer ersten Schnittebene,
- Figur 23: einen Längsschnitt durch das Einsatzteil gemäß Fi- gur 20 in einer zweiten Schnittebene, die orthogo- nal zur Schnittebene gemäß Figur 22 ausgerichtet ist,
- Figur 24: eine perspektivische Darstellung einer sechsten Ausführungsform eines Einsatzteils für das Druck- luft-Schalldämpfersystem,
- Figur 25: eine Vorderansicht des Einsatzteils gemäß der Figur 24,
- Figur 26: eine perspektivische Darstellung einer siebten Aus- führungsform eines Einsatzteils für das Druckluft- Schalldämpfersystem,
- Figur 27: eine Vorderansicht des Einsatzteils gemäß der Figur 26 und
- Figur 28: einen Längsschnitt durch eine weitere Ausführungs- form eines Druckluft-Schalldämpfersystems.

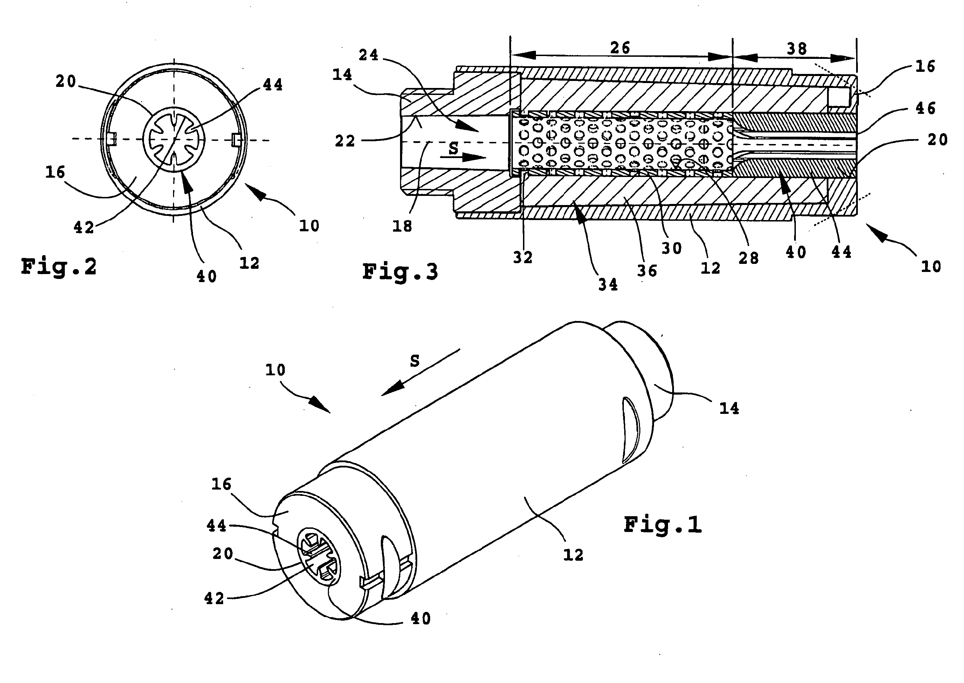

Das in den Figuren 1 bis 3 dargestellte Druckluft-Schalldämpfersystem 10 ist zur Schalldämpfung eines Druckluftstroms vorgesehen, der aus einer nicht dargestellten pneumatischen Baueinheit, beispielsweise einem konstant oder intermittierend von Druckluft durchströmten Vakuumerzeuger, abgegeben werden kann. Der Druckluftstrom kann zeitweilig oder dauerhaft mit einer hohen Strömungsgeschwindigkeit aus der pneumatischen Baueinheit ausströmen. Aufgrund der Führung des Druckluftstroms innerhalb der pneumatischen Baueinheit und aufgrund des Ausströmverhaltens des Druckluftstroms beim Austritt aus der Baueinheit in die Umgebung können sich Druckwellen mit unterschiedlichen Frequenzen ausbilden, die als Schall wahrnehmbar sind.

Das Druckluft-Schalldämpfersystem 10 dient dazu, derartige Schallwellen zumindest teilweise passiv und/oder aktiv zu bedämpfen, so dass beim Einsatz von pneumatischen Baueinheiten in Maschinen oder Anlagen die Einhaltung entsprechender Lärmschutzvorschriften gewährleistet werden kann.

Das Druckluft-Schalldämpfersystem 10 umfasst einen beispielsweise zylinderhülsenförmig ausgebildeten Grundkörper 12, der an einem ersten Endbereich einen Befestigungsabschnitt 14 aufweist. Der Befestigungsabschnitt 14 ist zur Festlegung des Druckluft-Schalldämpfersystems 10 an der nicht dargestellten pneumatischen Baueinheit ausgebildet und weist beispielsweise einen zur Schraubbefestigung an der pneumatischen Baueinheit dienenden Gewindeabschnitt auf. An einem dem Befestigungsabschnitt 14 entgegengesetzten, zweiten Endbereich des Grundkörpers 12 weist dieser eine in radialer Richtung erstreckte, kreisringförmige Stirnwand 16 auf, die von einer konzentrisch zur Mittellängsachse 18 des Grundkörpers 12 ausgebildeten Durchgangsbohrung 20 durchsetzt ist. Die kreisringförmige Stirnwand 16 grenzt an eine Fase 17, die ihrerseits an die zylindermantelförmige Außenoberfläche des Grundkörpers 12 angrenzt. Die Fase 17 kann, wie dies in der Figur 3 durch die gestrichelten Linien angedeutet ist, deutlich größer sein und sich über einen erheblichen Teil des Durchmessers des Grundkörpers 12 erstrecken.

Der Befestigungsabschnitt 14 ist mit einer konzentrisch zur Mittellängsachse 18 ausgebildeten Eintrittsbohrung 22 versehen, die zusammen mit dem hohlzylindrischen Grundkörper 12 und der Durchgangsbohrung 20 in der Stirnwand 16 einen durchgehenden, jeweils endseitig offenen Strömungskanal 24 begrenzt. Durch den Strömungskanal 24 kann ein Druckluftstrom ausgehend von der nicht dargestellten pneumatischen Baueinheit durch das Druckluft-Schalldämpfersystem 10 schallgedämpft in die Umgebung abgegeben werden.

Hierzu schließt sich bei der Ausführungsform der Figuren 1 bis 3 an die Eintrittsbohrung 22 ein erster Strömungskanalabschnitt 26 an, der exemplarisch mit einer als Reflexions- und Absorptionswand ausgebildeten Strömungskanalwand 28 versehen ist. Die Strömungskanalwand 28 umfasst in einem radial innenliegenden Bereich eine Lochhülse 30, die insbesondere zylinderhülsenförmig ausgebildet ist und die mit einer Vielzahl von in Umfangsrichtung verteilt angeordneten Radialbohrungen 32 versehen ist. Zwischen dem Grundkörper 12 und der Lochhülse 30 ist ein Ringraum 34 ausgebildet, der beispielsweise mit einem Absorptionsmaterial 36, exemplarisch einem Faserwerkstoff, gefüllt ist.

An den ersten Strömungskanalabschnitt 26 schließt sich stromabwärts in der mit S bezeichneten Strömungsrichtung für den Druckluftstrom ein zweiter Strömungskanalabschnitt 38 an, der bei dem vorliegenden Ausführungsbeispiel gemäß den Figuren 1 bis 3 in radialer Richtung durch ein Einsatzteil 40 begrenzt wird. Der zweite Strömungskanalabschnitt 38 erstreckt sich von einer an den ersten Strömungskanalabschnitt 26 angrenzenden Einströmöffnung 56 des Einsatzteils 40 bis hin zu einer am Einsatzteil 40 ausgebildeten Mündungsöffnung 46, durch die der im Strömungskanal 24 geführte Druckluftstrom als Freistrahl in die Umgebung entweichen kann.

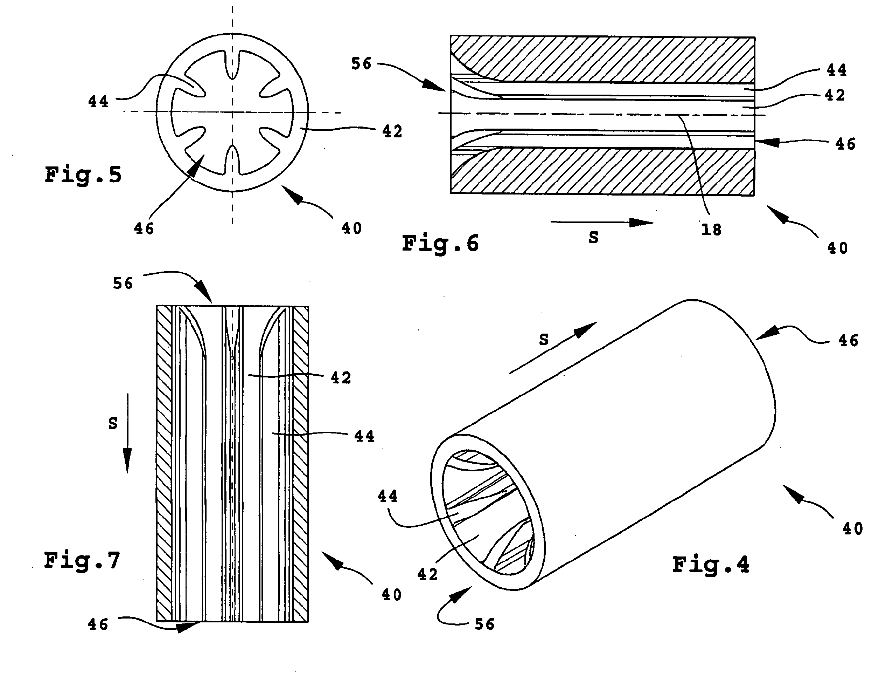

Eine erste Ausführungsform eines Einsatzteils 40, das in den Figuren 4 bis 7 näher dargestellt ist, umfasst eine zylinderhülsenförmige Kanalwand 42 und radial nach innen ragende Rippen 44. Ein Innendurchmesser der Kanalwand 42 des Einsatzteils 40 ist zweckmäßigerweise gleich wie ein Innendurchmesser der Lochhülse 30 und wie ein Innendurchmesser der Eintrittsbohrung 22 gewählt. Damit weist der Strömungskanal 24 über seine gesamte Länge, abgesehen von den nachstehend näher beschriebenen Rippen 44, stets den gleichen freien Querschnitt auf. Da die Eintrittsbohrung 22, der erste Strömungskanalabschnitt 26 und der zweite Strömungskanalabschnitt 38 zudem jeweils konzentrisch zur Mittellängsachse 18 angeordnet sind, weist der Strömungskanal 24 einen stetigen Verlauf auf.

Bei der ersten Ausführungsform des Einsatzteils 40 erstrecken sich die Rippen 44 parallel zur Längsrichtung des Grundkörpers 12, die durch die Mittellängsachse 18 angegeben ist, und über die gesamte Länge des Einsatzteils von der Einströmöffnung 56 bis zur Mündungsöffnung 46. Die Erstreckung der Rippen 44 in Richtung der Mittellängsachse 18 wird als Rippenlänge bezeichnet werden. Die Erstreckung der Rippen 44 in radialer Richtung nach innen in den Strömungskanal 24 wird als Rippenhöhe bezeichnet. Die Erstreckung der Rippen 44 in Umfangsrichtung des zylinderhülsenförmigen Einsatzteils 40 wird als Rippenbreite bezeichnet.

Die Rippen 44 weisen, wie dies insbesondere aus den Figuren 2, 4 und 5 hervorgeht, eine in radialer Richtung nach innen verjüngte, beispielsweise spitz zulaufende, insbesondere schneidenähnliche Profilierung auf. Bei der dargestellten Ausführungsform beträgt die Rippenhöhe ungefähr 25 Prozent des Innendurchmessers des von der Kanalwand 42 begrenzten Einsatzteils 40.

An einem der Mündungsöffnung 46 entgegengesetzten Endbereich des Einsatzteils 40, das heißt an der Einströmöffnung 56, sind die Rippen in Richtung des Befestigungsabschnitts 14 verjüngt ausgebildet. Die Rippenhöhe nimmt mit abnehmender Entfernung von der Mündungsöffnung 46 zu, bis ein Maximalerwert erreicht ist, der bei der vorliegenden Ausführungsform über die verbleibende Rippelänge beibehalten wird. Abseits der Verjüngung sind die Rippen 44 somit in radialer Richtung und in Umfangsrichtung äquidistant zueinander ausgeführt. Durch die Verjüngung der Rippen 44 wird für die Druckluftströmung ein sanfter Übergang zwischen der Lochhülse 30 und dem Einsatzteil 40 gewährleistet. Längs der Lochhülse 30 steht deren Innendurchmesser als freier Querschnitt für die Druckluftströmung zur Verfügung. Im Einsatzteil 40 wird der freie Querschnitt durch die Rippen 44 verkleinert. Die Rippen 44 sind jeweils nur im radial außenliegenden Bereich des zweiten Strömungskanalabschnitts 38 angeordnet. Dort liegt aufgrund von Wandeffekten eine kleinere Strömungsgeschwindigkeit für den Druckluftstrom vor als im radial innenliegenden Bereich. Da der Kernstrahl des Drucksluftstroms mit seiner großen Strömungsgeschwindigkeit nahezu unbeeinflusst bleibt, fällt die Beeinträchtigung des Strömungswiderstands für den Druckluftstrom durch die Rippen 44 gering aus.

Die Rippen 44 sind bezogen auf die Umfangsrichtung der Kanalwand 42 in gleicher Teilung angeordnet, so dass der Abstand zwischen benachbarten Rippen 44 in Umfangsrichtung über den gesamten Umfang jeweils gleich ist. Die von benachbarten Rippen eingeschlossenen Winkel sind ebenfalls jeweils gleich.

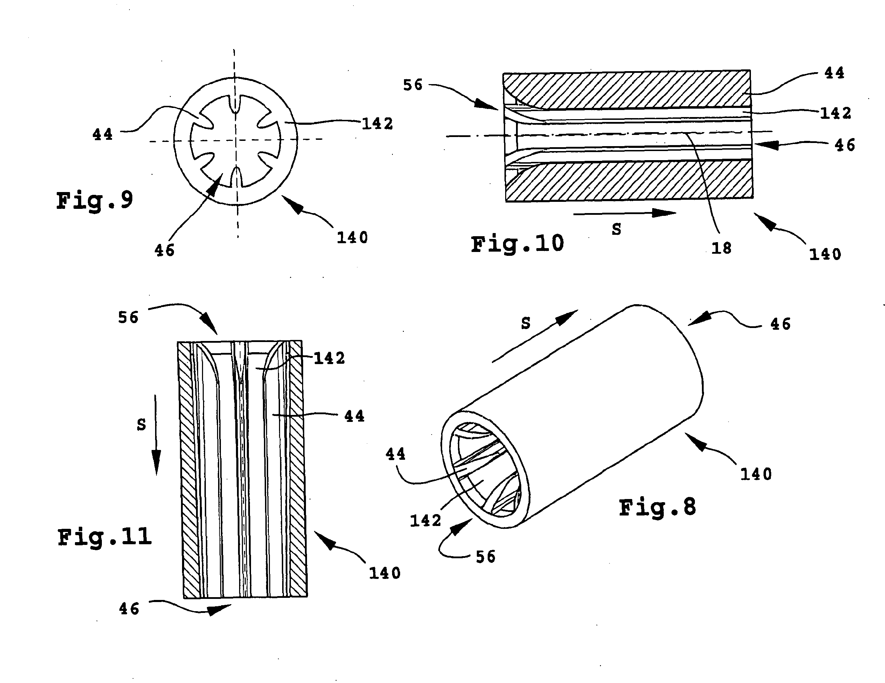

Die in den Figuren 8 bis 11 dargestellte zweite Ausführungsform eines Einsatzteils 140 weist im Unterschied zum Einsatzteil 40 gemäß der Figuren 1 bis 7 einen in Richtung der Mündungsöffnung 46 konisch verjüngten Querschnitt des zweiten Strömungskanalabschnitts 38 auf. Der konische Querschnitt ist durch eine entsprechende Gestaltung der Kanalwand 142 verwirklicht, die mit abnehmendem Abstand zur Mündungsöffnung 46 eine zunehmende Wandstärke aufweist. Die Rippen 44 sind über die gesamte Rippenlänge mit gleichbleibender Rippenbreite und Rippenhöhe und somit äquidistant ausgeführt. Sie weisen lediglich an der Einströmöffnung 56 eine Verjüngung der Rippenhöhe auf, um ein vorteilhaftes Einströmen des Druckluftstroms aus dem ersten Strömungskanalabschnitt 26 in das Einsatzteil 140 zu begünstigen. Durch die konische Verjüngung des freien Querschnitts des Einsatzteils 140 wird der für den Druckluftstrom zur Verfügung stehende freie Querschnitt im Einsatzteil 140 in Richtung der Mündungsöffnung 46 reduziert. Dadurch nimmt bei Annahme einer stationären Strömung die Strömungsgeschwindigkeit für den Druckluftstrom in Richtung der Mündungsöffnung 46 zu. Bei intermittierenden oder pulsierenden Druckluftströmungen werden durch die Verjüngung des freien Querschnitts die Druckpulsationen an der Mündungsöffnung 46 reduziert und die Schallabstrahlung vermindert. Dies kann beispielsweise darauf zurückgeführt werden, dass durch die Verjüngung der Strömungswiderstand im Einsatzteil 140 erhöht wird und eine Art Pufferwirkung für den Druckluftstrom hervorgerufen wird, durch die die Druckpulsationen an der Mündungsöffnung 46 reduziert werden.

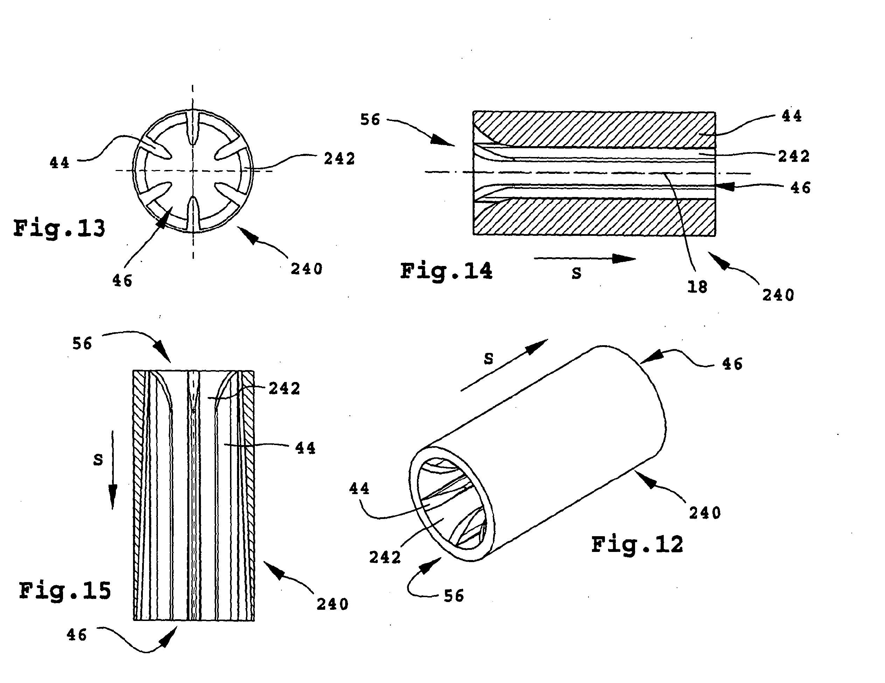

Das Einsatzteil 240 gemäß den Figuren 12 bis 15 unterscheidet sich von den Einsatzteilen 40 und 140 durch einen in Richtung der Mündungsöffnung 46 aufgeweiteten Querschnitt des zweiten Strömungskanalabschnitts 38, der durch Reduzierung der Wandstärke der Kanalwand 242 in Richtung der Mündungsöffnung 46 verwirklicht wird. Die Rippen 44 verlaufen geradlinig und mit durchgehend konstanter Rippenbreite längs des Einsatzteils 240. Im Bereich der Einströmöffnung 56 sind die Rippen 44 bezüglich ihrer Rippenhöhe verjüngt ausgebildet, um ein vorteilhaftes Einströmen des Druckluftstroms aus dem ersten Strömungskanalabschnitt 26 in das Einsatzteil 240 zu gewährleisten. Durch die Aufweitung des freien Querschnitts des Einsatzteils 240 in Richtung der Mündungsöffnung 46 wird eine Reduzierung der Strömungsgeschwindigkeit an der Mündungsöffnung 46 gegenüber der Strömungsgeschwindigkeit im ersten Strömungskanalabschnitt 26 erreicht. Zudem wird durch diese Maßnahme die Umfangsfläche oder Mantelfläche des aus der Mündungsöffnung 46 in die Umgebung austretenden Strahls vergrößert und damit die Grenzfläche zwischen der ruhenden Umgebungsluft und der bewegten Strahlluft. Dies führt zur verstärkten Durchmischung der Strahlluft mit der ruhendenden Umgebungsluft und der Teilströmungen des Freistrahls. Die Geschwindigkeitsgradienten innerhalb der freien Scherschicht werden abgeschwächt. Die Druckschwankungen am Strahlrand werden abgeschwächt, was zu einer Reduktion der Schallemission führt.

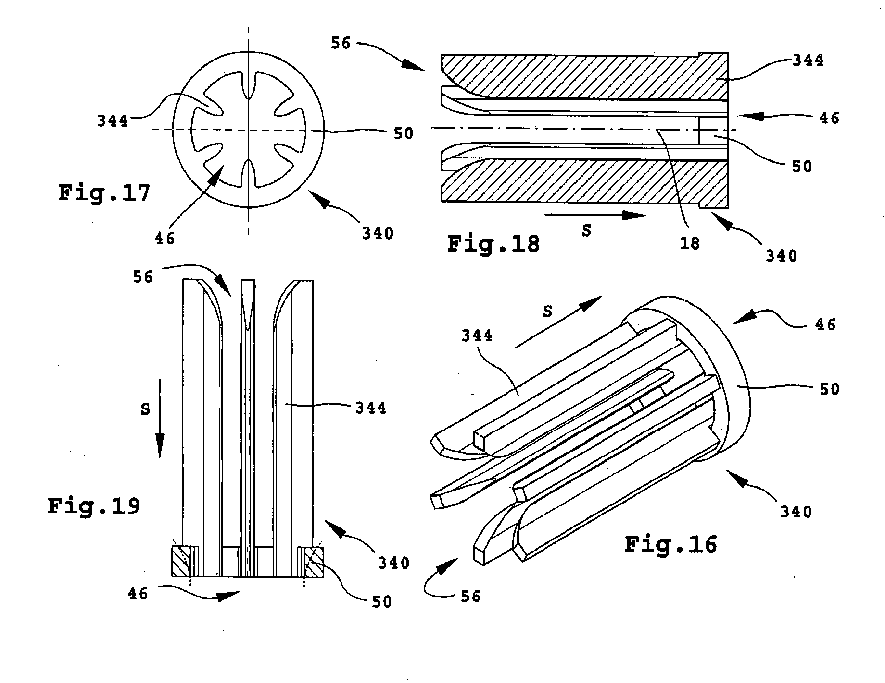

Bei der in den Figuren 16 bis 19 dargestellten vierten Ausführungsform eines Einsatzteils 340 sind an einem umlaufenden Ring 50, der die Mündungsöffnung 46 begrenzt, in Längsrichtung parallel zur Mittellängsachse 18 erstreckte, geradlinige Rippen 344 ausgebildet, die die gleiche Geometrie wie die aus den Figuren 1 bis 15 bekannten Rippen 44 der vorstehend beschriebenen Ausführungsformen der Einsatzteile 40, 140, 240 aufweisen. Die Rippen 344 weisen über ihre gesamte Längserstreckung die gleiche Rippenbreite auf. Auch die Rippenhöhe ist für die Rippen 344 bis auf einen dem Ring 50 abgewandten Endbereich konstant. Die Rippen 344 sind derart dimensioniert, dass sie bei den auftretenden Strömungsgeschwindigkeiten des Druckluftstroms eine ausreichende Steifigkeit aufweisen, so dass keine Schwingungen der Rippen 344 auftreten, die sich negativ auf die Schallemission auswirken könnten. An der Einströmöffnung 56 sind die Rippen 344 endseitig verjüngt ausgebildet. Durch die Durchbrüche oder Freistellungen zwischen den benachbarten Rippen 344 kann bei Verwendung des Einsatzteils 340 in dem Druckluft-Schalldämpfersystem 10 an Stelle des Einsatzteils 40 erreicht werden, dass Schallwellen auch im zweiten Strömungskanalabschnitt 38 in das Absorptionsmaterial 36 eintreten können und dort zumindest teilweise absorbiert werden. Der umlaufende Ring 50 kann, wie in der Figur 19 gestrichelt dargestellt, mit einer gekrümmten, sich in Strömungsrichtung 56 verengenden Innenoberfläche versehen sein, die Verwirbelungen am umlaufenden Ring 50 vermindert.

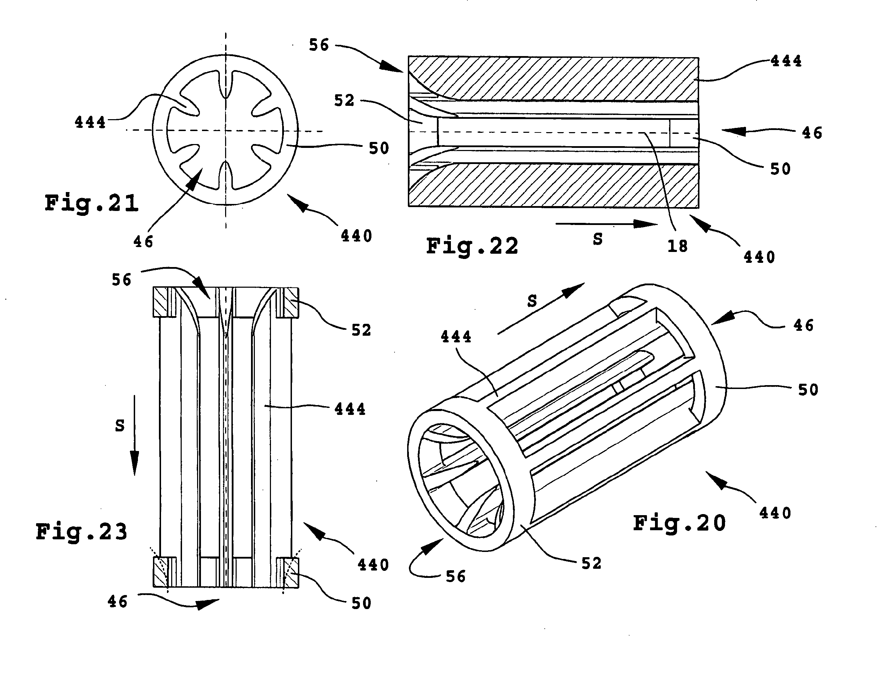

Bei der fünften Ausführungsform eines Einsatzteils 440 gemäß den Figuren 20 bis 23 ist neben dem umlaufenden Ring 50 zur Begrenzung der Mündungsöffnung 46 ein zweiter Ring 52 vorgesehen, der die der Mündungsöffnung 46 abgewandten Endbereiche der Rippen 444 stabilisiert und somit auch bei hohen Strömungsgeschwindigkeiten des Druckluftstroms ein unerwünschtes Schwingen der Rippen 444 unterbindet. Der umlaufende Ring 50 kann, wie in der Figur 23 gestrichelt dargestellt, mit einer gekrümmten, sich in Strömungsrichtung 56 verengenden Innenoberfläche versehen sein, die Verwirbelungen am umlaufenden Ring 50 vermindert.

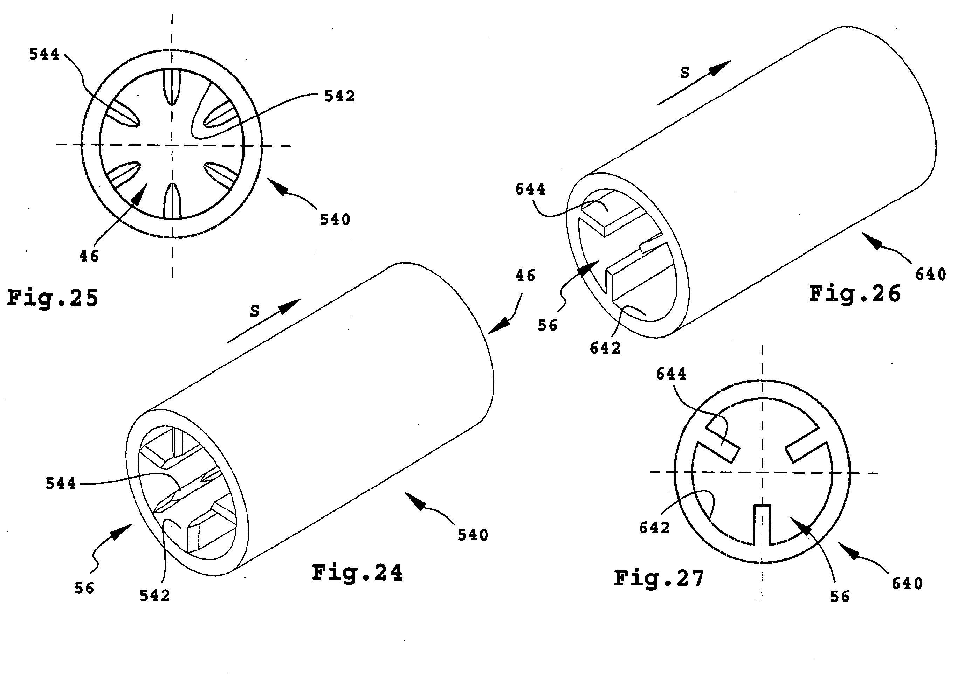

Bei der in den Figuren 24 und 25 dargestellten sechsten Ausführungsform eines Einsatzteils 540 sind die Rippen 544 wie auch bei den übrigen Ausführungsformen geradlinig und parallel zueinander ausgebildet, so dass sie sich bei Verwendung im Druckluft-Schalldämpfersystem 10 parallel zur Mittellängsachse 18 erstrecken. Die Rippen 544 des Einsatzteils 540 sind an der Einströmöffnung 56 in ihrer Rippenbreite verjüngt ausgebildet, während die Rippenhöhe über die gesamte Länge konstant ist. Die Kanalwand 542 kann derart ausgeführt sein, dass sich der freie Querschnitt des Strömungskanals in Richtung der Mündungsöffnung verjüngt oder erweitert. Mit dieser Ausführungsform des Einsatzteils 540 wird ebenso wie bei den vorstehend beschriebenen Ausführungsformen durch die Gestaltung der Rippen 544 an der Einströmöffnung 56 allmähliche Anpassung des freien Querschnitts für die Druckluftströmung in Richtung der Mündungsöffnung 46 gewährleistet.

Allen vorstehend beschriebenen Ausführungsformen von Einsatzteilen 40, 140, 240, 340, 440, 540 ist gemeinsam, dass sie wahlweise zur Anpassung des Druckluft-Schalldämpfersystems 10 an die jeweils vorliegenden Bedürfnisse zur Schalldämpfung des Druckluftstroms eingesetzt werden können. Durch die in radialer Richtung verjüngte, vorzugsweise spitz zulaufende, insbesondere schneidenförmige Gestaltung der Rippen 44, 344, 444, 544 und deren Erstreckung lediglich in einen Randbereich der durch die Einsatzteile 40, 140, 240, 340, 440, 540 strömenden Druckluftströmung wird diese in mehrere Strömungsbereiche unterteilt und der Umfang des Strömungsquerschnitts vergrößert, dabei bleibt der Kern der Strömung, wo die höchste Strömungsgeschwindigkeit vorherrscht, ungestört, da durch die in radialer Richtung begrenzte Ausdehnung der Rippen 44, 344, 444, 544 eine Störung der mit hoher Geschwindigkeit strömenden zentralen Strömung in den Einsatzteilen 40, 140, 240, 340, 440, 540 vermieden werden kann.

Das in den Figuren 26 und 27 dargestellte Einsatzteil 640 unterscheidet sich von den vorstehend beschriebenen Ausführungsformen von Einsatzteilen dadurch, dass die Rippen 644 quaderförmig ausgeführt sind. Eine stirnseitige Verjüngung oder eine Verjüngung der Rippen 644 in radialer Richtung ist nicht vorgesehen, vielmehr weisen die Rippen 644 über ihre gesamte Längserstreckung den gleichen, im Wesentlichen rechteckigen Querschnitt auf. Die beispielsweise drei Rippen 644 sind in Umfangsrichtung in gleicher Teilung angeordnet und erstrecken sich über die gesamte Länge des Einsatzteils 640. Zudem kann die Kanalwand 642 derart ausgeführt sein, dass sich ein freier Querschnitt des Strömungskanals in Richtung der Mündungsöffnung verjüngt oder erweitert. Diese Maßnahmen ermöglichen eine einfache Herstellung des Einsatzteils 640.

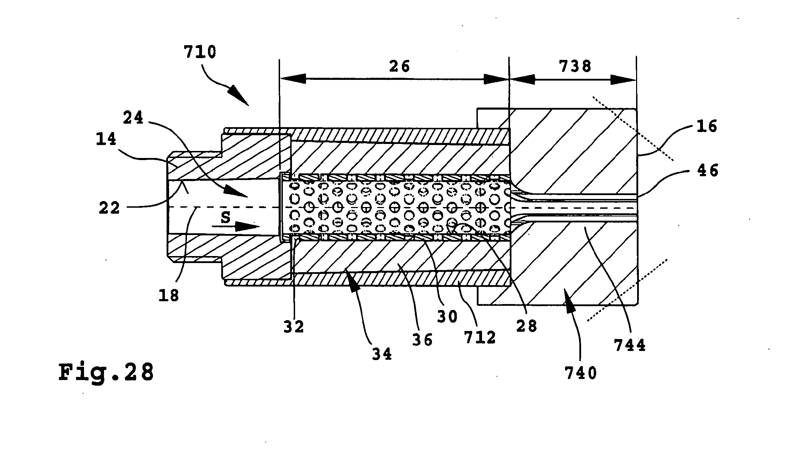

Die in der Figur 28 dargestellte Ausführungsform eines Druckluft-Schalldämpfersystems 710 unterscheidet sich von der Ausführungsform gemäß der Figuren 1 bis 3 lediglich dadurch, dass der zweite Strömungskanalabschnitt 738 nicht durch ein Einsatzteil, sondern durch ein Aufsatzteil 740 gebildet wird, das auf den beispielsweise zylinderhülsenförmig ausgebildeten Grundkörper 712 aufgesteckt wird. Der übrige Aufbau des Druckluft-Schalldämpfersystems 710 entspricht dem des Druckluft-Schalldämpfersystems 10, weshalb für identische oder funktionsgleiche Komponenten die gleichen Bezugszeichen verwendet werden. Die Rippen 744 können in gleicher Weise wie die Rippen der vorstehend beschriebenen Einsatzteile ausgebildet werden, bei der dargestellten Ausführungsform des Aufsatzteils 740 sind die Rippen 744 wie die Rippen 44 des Einsatzteils 40 ausgebildet. Das Aufsatzteil 740 kann wie dargestellte eine kleine Fase oder wie gestrichelt angedeutet eine große Fase aufweisen.

## Patentansprüche

1. Druckluft-Schalldämpfersystem zur Schalldämpfung eines aus einer pneumatischen Baueinheit ausströmenden Druckluftstroms, mit einem Grundkörper (12; 712), der in einer Längsrichtung (18) von einem Strömungskanal (24) durchsetzt ist, der für eine Durchströmung mit dem Druckluftstrom ausgebildet ist und der an einem stirnseitigen Endbereich des Grundkörpers (12) in einer Mündungsöffnung (46) ausmündet, wobei im Strömungskanal (24) wenigstens eine radial nach innen in den freien Querschnitt des Strömungskanals (24) ragende und ausgehend von der Mündungsöffnung (46) in Längsrichtung (18) erstreckte Rippe (44; 344; 444; 544; 644; 744) ausgebildet ist, **dadurch gekennzeichnet, dass** die Strömungskanalwand in einem ersten Strömungskanalabschnitt (26) mit einer Reflexions- und oder Absorptionswand (28) ausgebildet ist und sich die Rippe (44; 344; 444; 544; 644; 744) ausgehend von der Mündungsöffnung (46) zumindest bereichsweise in einen zweiten Strömungskanalabschnitt (38) erstreckt, der zwischen dem ersten Strömungskanalabschnitt (26) und der Mündungsöffnung (46) ausgebildet ist.

2. Druckluft-Schalldämpfersystem nach Anspruch 1, **dadurch gekennzeichnet, dass** die wenigstens eine Rippe (44; 344; 444; 544; 644; 744) geradlinig, insbesondere parallel zur Längsrichtung (18) ausgebildet ist.

3. Druckluft-Schalldämpfersystem nach einem der vorhergehenden Ansprüche, **dadurch gekennzeichnet, dass** in Umfangsrichtung des Strömungskanals (24) mehrere Rippen (44; 344; 444; 544; 644; 744) angeordnet sind.

4. Druckluft-Schalldämpfersystem nach Anspruch 3, **dadurch gekennzeichnet, dass** die Rippen (44; 344; 444; 544; 644; 744) in gleicher Teilung in Umfangsrichtung im Strömungskanal (24) angeordnet sind.

5. Druckluft-Schalldämpfersystem nach einem der vorhergehenden Ansprüche, **dadurch gekennzeichnet, dass** die wenigstens eine Rippe (44; 344; 444; 544; 744) bezogen auf die Längsrichtung (18) endseitig, zumindest an einem der Mündungsöffnung (46) abgewandten Endbereich, verjüngt ausgebildet ist.

6. Druckluft-Schalldämpfersystem nach Anspruch 5, **dadurch gekennzeichnet, dass** wenigstens ein Endbereich der Rippe (44; 344; 444; 544; 744) hinsichtlich der Rippenbreite und/oder der Rippenhöhe verjüngt ausgebildet ist.

7. Druckluft-Schalldämpfersystem nach einem der vorhergehenden Ansprüche, **dadurch gekennzeichnet, dass** die wenigstens eine Rippe (44; 344; 444; 544; 744) in einer senkrecht zur Längsrichtung ausgerichteten Querschnittsebene eine in radialer Richtung nach innen verjüngte, insbesondere spitz zulaufende, vorzugsweise schneidenartige, Profilierung aufweist.

8. Druckluft-Schalldämpfersystem nach einem der vorhergehenden Ansprüche, **dadurch gekennzeichnet, dass** eine zwischen in Umfangsrichtung benachbart angeordneten Rippen (44; 344; 444; 544; 644), vorzugsweise zwischen jedem Rippenpaar, ausgebildete Strömungskanalwand (42; 142; 242) wenigstens einen Durchbruch aufweist.

9. Druckluft-Schalldämpfersystem nach einem der vorhergehenden Ansprüche, **dadurch gekennzeichnet, dass** die wenigstens eine Rippe (44; 344; 444; 544; 644) an einem zur Aufnahme im Grundkörper (12) vorgesehenen, zumindest bereichsweise hülsenförmig ausgebildeten Einsatzteil (40; 140; 240; 340; 440; 540; 640) angeordnet ist.

10. Druckluft-Schalldämpfersystem nach Anspruch 9, **dadurch gekennzeichnet, dass** das Einsatzteil (340; 440) wenigstens einen umlaufenden Tragring (50, 52) und eine oder mehrere in Längsrichtung erstreckte, insbesondere in Umfangsrichtung in gleicher Teilung angeordnete, vom Tragring (50, 52) getragene Rippen (344; 444) umfasst.

11. Druckluft-Schalldämpfersystem nach einem der vorhergehenden Ansprüche, **dadurch gekennzeichnet, dass** die wenigstens eine Rippe (744) an einem zur Anbringung am Grundkörper (712) vorgesehenen, zumindest bereichsweise hülsenförmig ausgebildeten Aufsatzteil (740) angeordnet ist.

12. Druckluft-Schalldämpfersystem nach einem der vorhergehenden Ansprüche, **dadurch gekennzeichnet, dass** im Grundkörper (12) in einem radial außenliegenden Bereich längs der Erstreckung der wenigstens einen Rippe (44; 344; 444; 544; 644) zumindest bereichsweise schalldämpfendes Absorptionsmaterial (36) angeordnet ist.

13. Druckluft-Schalldämpfersystem nach einem der vorhergehenden Ansprüche, **dadurch gekennzeichnet, dass** der Strömungskanal (24) in Umfangsrichtung von einer Strömungskanalwand (142) begrenzt ist, die derart ausgebildet ist, dass sich ein Querschnitt des Strömungskanals (24) in Längsrichtung (18) zur Mündungsöffnung (46) verjüngt, insbesondere konisch verjüngt.

14. Druckluft-Schalldämpfersystem nach einem der Ansprüche 1 bis 12, **dadurch gekennzeichnet, dass** der Strömungskanal (24) in Umfangsrichtung von einer Strömungskanalwand ( 242) begrenzt ist, die derart ausgebildet ist, dass sich ein Querschnitt des Strömungskanals (24) in Längsrichtung (18) zur Mündungsöffnung (46) hin erweitert, insbesondere konisch erweitert.

15. Druckluft-Schalldämpfersystem nach einem der vorhergehenden Ansprüche, **dadurch gekennzeichnet, dass** der Strömungskanal (24) längs des ersten Strömungskanalabschnitts (26) und des zweiten Strömungskanalabschnitts (38) stetig, insbesondere zylindrisch, ausgebildet ist.

16. Druckluft-Schalldämpfersystem nach einem der vorhergehenden Ansprüche, **dadurch gekennzeichnet, dass** die wenigstens eine Rippe (44; 344; 444; 544; 644; 744) im Bereich der Mündungsöffnung (46) stirnseitig bündig mit dem Grundkörper (12) abschließt.

## Claims

1. Compressed air silencer system for sound-damping of a compressed air flow issuing from a pneumatic unit, with a base body (12; 712) through which there passes in an axial direction (18) a flow passage (24) designed for the flow of compressed air flow and which leads out at an end-face end section of the base body (12) into an outlet opening (46), wherein there is formed in the flow passage (24) at least one rib (44; 344; 444; 544; 644; 744) projecting radially inwards into the free cross-section of the flow passage (24) and extending from the outlet opening (46) in the axial direction (18), **characterised in that** the flow passage wall is provided in a first flow passage section (26) with a reflection and/or absorption wall (28) and the rib (44; 344; 444; 544; 644; 744) extends from the outlet opening (46) at least partly into a second flow passage section (38) which is formed between the first flow passage section (26) and the outlet opening (46).

2. Compressed air silencer system according to claim 1, **characterised in that** the rib or ribs (44; 344; 444; 544; 644; 744) is or are straight, in particular parallel to the axial direction (18).

3. Compressed air silencer system according to any of the preceding claims, **characterised in that** several ribs (44; 344; 444; 544; 644; 744) are arranged in the circumferential direction of the flow passage (24).

4. Compressed air silencer system according to claim 3, **characterised in that** the ribs (44; 344; 444; 544; 644; 744) are arranged with the same spacing in the circumferential direction of the flow passage (24).

5. Compressed air silencer system according to any of the preceding claims, **characterised in that** the rib or ribs (44; 344; 444; 544; 744) is or are tapered at the end relative to the axial direction (18), at least at an end section facing away from the outlet opening (46).

6. Compressed air silencer system according to claim5, **characterised in that** at least one end section of the rib (44; 344; 444; 544; 744) is tapered in respect of rib width and/or rib height.

7. Compressed air silencer system according to any of the preceding claims, **characterised in that** the rib or ribs (44; 344; 444; 544; 744) has or have, in a cross-sectional plane aligned at right-angles to the axial direction, a profile tapering radially inwards, in particular sharply, preferably blade-like.

8. Compressed air silencer system according to any of the preceding claims, **characterised in that** a flow passage wall (42; 142; 242) formed between ribs (44; 344; 444; 544; 644) adjacent in the circumferential direction, preferably between each pair of ribs, has at least one through hole.

9. Compressed air silencer system according to any of the preceding claims, **characterised in that** the rib or ribs (44; 344; 444; 544; 644) is or are provided on an insert (40; 140; 240; 340; 440; 540; 640), at least partly sleeve-shaped, provided for location in the base body (12).

10. Compressed air silencer system according to claim 9, **characterised in that** the insert (340; 440) comprises at least one continuous support ring (50, 52) and one or more ribs (344; 444) carried by the support ring (50, 52) and extending axially, in particular with equal spacing in the circumferential direction.

11. Compressed air silencer system according to any of the preceding claims, **characterised in that** the rib or ribs (744) is or are provided on an attachment part (740), at least partly sleeve-shaped, and provided for attachment to the base body (712).

12. Compressed air silencer system according to any of the preceding claims **characterised in that**, in the base body (12), in a radially outer area along the extent of the rib or ribs (44; 344; 444; 544; 644), sound damping absorption material (36) is provided at least in certain areas.

13. Compressed air silencer system according to any of the preceding claims **characterised in that**, in the circumferential direction, the flow passage (24) is bounded by a flow passage wall (142) which is so designed that a cross-section of the flow passage (24) tapers in the axial direction (18) towards the outlet opening (46), and in particular tapers conically.

14. Compressed air silencer system according to any of claims 1 to 12 **characterised in that** in the circumferential direction, the flow passage (24) is bounded by a flow passage wall (242) which is so designed that a cross-section of the flow passage (24) widens in the axial direction (18) towards the outlet opening (46), and in particular widens conically.

15. Compressed air silencer system according to any of the preceding claims, **characterised in that** the flow passage (24) is made consistent along the first flow passage section (26) and the second flow passage section (38), and in particular is cylindrical.

16. Compressed air silencer system according to any of the preceding claims, **characterised in that** the end face(s) of the rib or ribs (44; 344; 444; 544; 644; 744) terminate(s) flush with the base body (12) in the area of the outlet opening (46).

## Revendications

1. Système d'amortissement d'oscillations à air comprimé pour l'amortissement d'oscillations d'un courant d'air comprimé s'écoulant d'une unité de construction pneumatique, avec un corps de base (12 ; 712) qui est traversé dans un sens longitudinal (18) par un canal d'écoulement (24) réalisé pour un passage avec le courant d'air comprimé et débouchant sur une zone d'extrémité côté frontal du corps de base (12) dans une embouchure (46), sachant qu'au moins une nervure (44 ; 344 ; 444 ; 544 ; 644 ; 744) étendue à partir de l'embouchure (46) dans le sens longitudinal (18) et pénétrant radialement vers l'intérieur dans la section libre du canal d'écoulement (24) est réalisée dans le canal d'écoulement (24), **caractérisé en ce que** la paroi de canal d'écoulement est réalisée dans une première section de canal d'écoulement (26) avec une paroi réfléchissante et/ou absorbante (28) et la nervure (44 ; 344 ; 444 ; 544 ; 644 ; 744) s'étend à partir de l'embouchure (46) au moins par endroits dans une seconde section de canal d'écoulement (38) réalisée entre la première section de canal d'écoulement (26) et l'embouchure (46).

2. Système d'amortissement d'oscillations à air comprimé selon la revendication 1, **caractérisé en ce qu'**au moins la nervure (44 ; 344 ; 444 ; 544 ; 644 ; 744) est réalisée de manière linéaire, en particulier parallèle au sens longitudinal (18).

3. Système d'amortissement d'oscillations à air comprimé selon l'une quelconque des revendications précédentes, **caractérisé en ce que** plusieurs nervures (44 ; 344 ; 444 ; 544 ; 644 ; 744) sont disposées dans le sens périphérique du canal d'écoulement (24).

4. Système d'amortissement d'oscillations à air comprimé selon la revendication 3, **caractérisé en ce que** les nervures (44 ; 344 ; 444 ; 544 ; 644 ; 744) sont espacées de manière identique dans le sens périphérique dans le canal d'écoulement (24).

5. Système d'amortissement d'oscillations à air comprimé selon l'une quelconque des revendications précédentes, **caractérisé en ce qu'**au moins la nervure (44 ; 344 ; 444 ; 544 ; 744) est réalisée de manière rétrécie par rapport au sens longitudinal (18) côté extrémité, au moins sur une zone d'extrémité éloignée de l'embouchure (46).

6. Système d'amortissement d'oscillations à air comprimé selon la revendication 5, **caractérisé en ce qu'**au moins une zone d'extrémité de la nervure (44 ; 344 ; 444 ; 544 ; 744) est réalisée de manière rétrécie en ce qui concerne la largeur et/ou la hauteur de nervure.

7. Système d'amortissement d'oscillations à air comprimé selon l'une quelconque des revendications précédentes, **caractérisé en ce qu'**au moins la nervure (44 ; 344 ; 444 ; 544 ; 744) présente, dans un plan de section transversale orienté perpendiculairement au sens longitudinal, un profilage rétréci dans le sens radial vers l'intérieur, en particulier se terminant en pointe, de préférence de type lame.

8. Système d'amortissement d'oscillations à air comprimé selon l'une quelconque des revendications précédentes, **caractérisé en ce qu'**une paroi de canal d'écoulement (42 ; 142 ; 242) réalisée entre des nervures (44 ; 344 ; 444 ; 544 ; 644) disposées de manière contiguë dans le sens périphérique, de préférence entre chaque paire de nervures, présente au moins une brèche.

9. Système d'amortissement d'oscillations à air comprimé selon l'une quelconque des revendications précédentes, **caractérisé en ce qu'**au moins la nervure (44 ; 344 ; 444 ; 544 ; 644) est disposée sur une partie d'insertion (40 ; 140 ; 240 ; 340 ; 440 ; 540 ; 640) prévue pour le logement dans le corps de base (12), réalisée au moins par endroits en forme de douille.

10. Système d'amortissement d'oscillations à air comprimé selon la revendication 9, **caractérisé en ce que** la partie d'insertion (340 ; 440) comporte au moins un anneau porteur (50, 52) rotatif et une ou plusieurs nervures (344 ; 444) portées par l'anneau porteur (50, 52), espacées de manière identique en particulier dans le sens périphérique, étendues dans le sens longitudinal.

11. Système d'amortissement d'oscillations à air comprimé selon l'une quelconque des revendications précédentes, **caractérisé en ce qu'**au moins la nervure (744) est disposée sur une partie rapportée (740) réalisée au moins par endroits en forme de douille, prévue pour le montage sur le corps de base (712).

12. Système d'amortissement d'oscillations à air comprimé selon l'une quelconque des revendications précédentes, **caractérisé en ce que** du matériau d'absorption (36) amortissant les oscillations au moins par endroits est disposé dans le corps de base (12) dans une zone radialement extérieure le long de l'étendue d'au moins la nervure (44 ; 344 ; 444 ; 544 ; 644).

13. Système d'amortissement d'oscillations à air comprimé selon l'une quelconque des revendications précédentes, **caractérisé en ce que** le canal d'écoulement (24) est limité dans le sens périphérique par une paroi de canal d'écoulement (142) réalisée de telle manière qu'une section transversale du canal d'écoulement (24) se rétrécisse dans le sens longitudinal (18) vers l'embouchure (46), en particulier se rétrécisse en forme de cône.

14. Système d'amortissement d'oscillations à air comprimé selon l'une quelconque des revendications 1 à 12, **caractérisé en ce que** le canal d'écoulement (24) est limité dans le sens périphérique par une paroi de canal d'écoulement (242) réalisée de telle manière qu'une section transversale du canal d'écoulement (24) s'élargisse dans le sens longitudinal (18) vers l'embouchure (46), en particulier s'élargisse en forme de cône.

15. Système d'amortissement d'oscillations à air comprimé selon l'une quelconque des revendications précédentes, **caractérisé en ce que** le canal d'écoulement (24) est réalisé en continu en particulier de manière cylindrique le long de la première section de canal d'écoulement (26) et de la seconde section de canal d'écoulement (38).

16. Système d'amortissement d'oscillations à air comprimé selon l'une quelconque des revendications précédentes, **caractérisé en ce qu'**au moins la nervure (44 ; 344 ; 444 ; 544 ; 644 ; 744) se termine côté frontal à fleur avec le corps de base (12) dans la zone de l'embouchure (46).
